# EUROPÄISCHE PATENTANMELDUNG

(11) **EP 1 473 169 A2**
(43) Veröffentlichungstag der Anmeldung: **03.11.2004**
(21) Anmeldenummer: 04008814.8
(22) Anmeldetag: 14.04.2004
(51) Int. Cl.: B41K 1/04

(54) **Austauschbarer Stempelkörper**

(30) Priorität: 27.04.2003 DE 20307129 U
(71) Anmelder: Ziegler, Sven, 73061 Ebersbach (DE)
(72) Erfinder: Ziegler, Sven, 73061 Ebersbach (DE)
(74) Vertreter: Fürst, Siegfried

(57) **Zusammenfassung**

Die vorliegende Erfindung betrifft einen Stempel zum Anbringen einer Beschriftung oder Prägung an einem Körper. Dieser Stempel zum Prägen im Hoch- oder Tiefdruck besitzt einen Stempeleinsatz (1), der Stempelmarkierungen (2) aufweist, wobei der Stempeleinsatz (1) in einem Stempelkörper (3) angeordnet ist und selbiger, im Querschnitt gesehen, im Wesentlichen einen halbrunden Querschnitt aufweist sowie am Außenumfang dieses Stempeleinsatzes (1) ein Rastvorsprung (4) angeordnet ist, und am Stempelkörper (3) eine Feder (5) vorgesehen ist, die mit dem Rastvorsprung (4) zusammenwirkt.

## Beschreibung

Die Erfindung betrifft einen Stempel zum Anbringen einer Beschriftung oder Prägung an einen Körper.

Stempel zum Anbringen einer Beschriftung oder Prägung in den unterschiedlichsten Materialien sind dem Fachmann in unterschiedlichster Ausführungsform bekannt und geläufig. Dabei ist an einem Stempeleinsatz an seiner Oberfläche eine Stempelmarkierung angebracht, die entweder erhaben oder vertieft ist, um auf das zu stempelnde Material im Hoch- oder Tiefdruckverfahren eine Beschriftung oder Prägung anzubringen. Der Stempeleinsatz kann entweder relativ zu dem zu bestempelnden Material bewegt werden, z. B. aufgepresst werden, oder das zu stempelnde Material wird in einem Spritzgussvorgang in eine Spritzgussform eingespritzt, wobei der Stempeleinsatz mit den Stempelmarkierungen selbst Bestandteil der Spritzgussform ist, so dass an dem aus der Spritzgussform erhaltenen Kunststoffteil an dessen Oberfläche die gewünschte Stempelmarkierung angebracht ist.
Es ist bekannt, dass der Stempeleinsatz lösbar in einem Stempelkörper angeordnet ist, um z. B. nacheinander mit demselben Stempel durch Austausch des Stempeleinsatzes unterschiedliche Markierungen anzubringen. Die Befestigung der Stempeleinsätze erfolgt z. B. über aufwendige Verschraubungen, so dass das Austauschen der Stempeleinsätze mit einem erheblichen Zeitaufwand verbunden ist.

Ausgehend von diesem Stand der Technik ist der Fachmann vor die Aufgabe gestellt, einen Stempel derart zu gestalten, dass das Austauschen unterschiedlicher Stempeleinsätze mit jeweils unterschiedlichen Stempelmarkierungen vereinfacht ist und dazu keine zusätzlichen Werkzeuge benötigt werden.

Erfindungsgemäß wird diese Aufgabe durch einen Stempel mit den Merkmalen des Patentanspruchs 1 gelöst. Vorteilhafte Ausgestaltungen der Erfindung sind Gegenstand von Unteransprüchen.

Der Kerngedanke der Erfindung liegt darin, dass der Stempeleinsatz des Stempels, der die jeweils gewünschten Stempelmarkierungen entweder erhaben und/oder vertieft aufweist, im Querschnitt betrachtet im Wesentlichen eine halbrunde Formgebung aufweist. Dabei ist der halbrunde Stempeleinsatz an seinem halbrunden Außenumfang mit einem Rastvorsprung versehen, der vorzugsweise dadurch gebildet ist, dass an dem halbrunden Außenumfang eine randseitige Ausnehmung ausgebildet ist, die an dem halbrunden Außenumfang einen Hinterschnitt bildet. Dieser Stempeleinsatz ist in einen Stempelkörper eingesetzt, der über eine korrespondierende, im Wesentlichen ebenfalls halbrunde Ausnehmung verfügt. Zusätzlich ist an dieser Ausnehmung des Stempelkörpers eine Feder ausgebildet, die mit dem Rastvorsprung am Außenumfang des Stempeleinsatzes zusammenwirkt. Beim Einsetzen des Stempeleinsatzes in die Ausnehmung des Stempelkörpers wird der Rastvorsprung am Stempeleinsatz in Eingriff mit der Feder in der Ausnehmung des Stempelkörpers gebracht, so dass der Stempeleinsatz lösbar in dem Stempelkörper befestigt ist. Der Stempelkörper kann im Rahmen der Erfindung in einen Stempelblock, der z. B. die eigentliche Spritzgussform bildet, eingesetzt sein oder der Stempeleinsatz ist unmittelbar in den Stempelblock in eine entsprechende Ausnehmung eingesetzt.
Das Lösen/Einsetzen des Stempeleinsatzes in die Ausnehmung des Stempelkörpers erfolgt aufgrund der im Wesentlichen halbrunden Gestaltung des Stempeleinsatzes durch ein Drücken auf einer Seite der Stempelfläche des Stempeleinsatzes, so dass der Stempeleinsatz eine Drehbewegung ausführt, bei der er sich in der halbrunden Ausnehmung des Stempelkörpers verdreht. Beim Einsetzen des Stempeleinsatzes wird er mit einem Abschnitt in die halbrunde Ausnehmung eingesetzt und durch Niederdrücken des aus der Ausnehmung überstehenden Abschnittes in der Ausnehmung verdreht, bis der Rastvorsprung am Stempeleinsatz mit der Feder im Stempelkörper in Eingriff gebracht ist.

Der Vorteil der Erfindung besteht darin, dass der Stempeleinsatz ohne weitere Werkzeuge oder Befestigungsvorrichtungen im Stempelkörper einsetzbar und befestigbar ist, so dass das Austauschen des Stempeleinsatzes mit einer Stempelmarkierung gegen einen Stempeleinsatz mit einer anderen Stempelmarkierung in einfacher und schneller Weise durchführbar ist. Durch den Stempel, der bündig in den umgehenden Stempelkörper eingesetzt ist, werden dadurch zum Beispiel beim Spritzgießen keine weiteren Prägungen oder Markierungen durch einen Stempelrand oder dergleichen eingebracht. Insbesondere beim Spitzgießen wird durch das noch flüssige Kunststoffmaterial ein Druck auf dem Stempel ausgeübt, so dass dieser in seiner Position verbleibt. Der Stempeleinsatz kann durch ein Kreisbogenabschnitt sein, also zum Beispiel nur ein Viertelkreis. Die Feder im Stempelkörper dient als Endanschlag für den Stempeleinsatz, so dass dieser nur bis zu einem feststehenden Punkt in den Stempelkörper einsetzbar und relativ zu diesem verdrehbar ist, so dass ihre Oberflächen bündig abschließen.

Derartige Stempel können für alle möglichen Anwendungen eingesetzt werden, z. B. zum Aufbringen von Stempelmarkierungen auf Papier, Pappe, Kunststofffolien oder dergleichen oder Lebensmittel wie Schokolade oder zum Anbringen von Stempelmarkierungen an Kunststoff-Spritzgussteilen. Dazu ist an der Spritzgussform ein Stempelkörper mit einem darin lösbar eingesetzten Stempeleinsatz vorgesehen, so dass beim Einspritzen des Kunststoffs in die Spritzgussform dem damit erhaltenen Kunststoffteil die gewünschte Markierung, entweder erhaben oder vertieft, eingeprägt ist. Die erreichbare Maßgenauigkeit des Stempeleinsatzes bzw. des Stempelkörpers ist dabei so, dass flüssiges Kunststoff nicht zwischen diese Bauteile eindringen kann.

Im Rahmen der Erfindung ist es möglich, dass der Stempelkörper mit der halbrunden Ausnehmung zur Aufnahme des Stempeleinsatzes wiederum in einen den Stempelkörper umgebenden Stempelblock, der dann z. B. die eigentliche Spritzgussform bildet, auch lösbar eingesetzt ist oder dass der im Wesentlichen halbrunde Stempeleinsatz unmittelbar in eine korrespondierende Ausnehmung im Stempelkörper, also z. B. der Spritzgussform eingesetzt ist.

Insbesondere bei Kunststoff-Spritzgussformen sind der Stempeleinsatz bzw. der Stempelkörper oder die Spritzgussform selbst aus Metall angefertigt, so dass die Feder über gewisse elastische Eigenschaften verfügt. Bei Verschleiß bzw. Beschädigung der Feder ist es daher vorteilhaft, dass die Feder selbst wiederum an dem Stempelkörper lösbar befestigbar ist. Dies kann z. B. durch eine Verschraubung der Feder an dem Stempelkörper erfolgen.
Die Oberfläche des Stempeleinsatzes ist entweder plan, abgesehen von den erhabenen oder vertieften Stempelmarkierungen, oder sie verfügt über eine dreidimensionale Kontur. Das bedeutet, dass mit den austauschbaren Stempeleinsätzen z. B. einem Kunststoff-Spritzgussteil eine dreidimensionale Markierung bzw. äußere Formgebung entweder erhaben oder vertieft verliehen werden kann.

Ebenso kann der Stempelkörper, in den der Stempeleinsatz seinerseits eingesetzt ist, gegenüber dem umgebenden Stempelblock, also z. B. der Spritzgussform, erhaben oder vertieft sein, um eine weitere Prägung in der zu prägenden Oberfläche zu erhalten. Dazu ist in einer vorteilhaften Weiterbildung der Erfindung der Stempelblock mit einer Öffnung/Durchbruch versehen, in die der Stempelkörper einsetzbar ist, wobei in die Öffnung/Durchbruch weitere Distanzstücke eingesetzt sind, um den Stempelkörper bzw. den darin angeordneten Stempeleinsatz in gewünschter Lage auszurichten. Dabei kann insbesondere der Stempelkörper derart in den Stempelblock eingesetzt sein, dass er geringfügig über die umgebende Oberfläche des Stempelblocks erhaben bzw. relativ dazu vertieft ist.

Es ist auch möglich, dass mehrere Stempeleinsätze nebeneinander vorgesehen sind, die in eine entsprechend vergrößerte Ausnehmung des Stempelkörpers bzw. unmittelbar in den Stempelblock selbst eingesetzt sind.

Weitere Einzelheiten, Merkmale und Vorteile der Erfindung lassen sich dem nachfolgenden Beschreibungsteil entnehmen, in dem anhand von Zeichnungen Ausführungsbeispiele der Erfindung näher dargestellt sind. Es zeigen:
- **Fig. 1**: einen erfindungsgemäßen Stempel in perspektivischer Darstellung,
- **Fig. 2**: einen Stempeleinsatz,
- **Fig. 3**: einen Stempelkörper,
- **Fig. 4**: eine andere Ausführungsform eines Stempels,
- **Fig. 5**: eine dritte Ausführungsform eines Stempels, und
- **Fig. 6**: eine vierte Ausführungsform eines Stempels

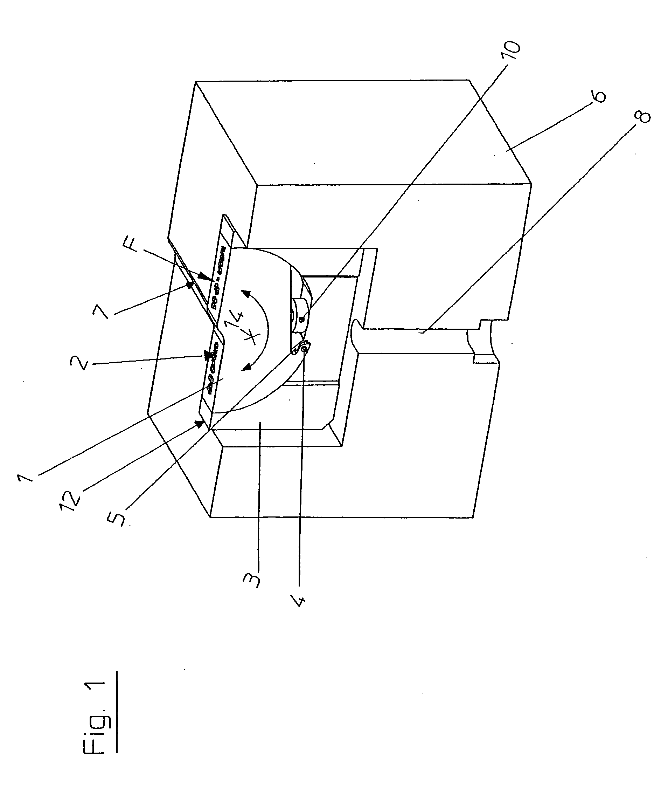

Bei dem in Figur 1 dargestellten Ausführungsbeispiel der Erfindung handelt es sich um einen Stempel mit einem Stempeleinsatz 1, der im Querschnitt gesehen eine im Wesentlichen halbrunde Form aufweist. Dabei ist in dem halbrunden Außenumfang des Stempeleinsatzes 1 ein Rastvorsprung 4 ausgebildet, der mit einer Feder 5, die an einem Stempelkörper 3 angeordnet ist, zusammenwirkt. Zur Aufnahme des Stempeleinsatzes 1 weist der Stempelkörper 3 eine zur Formgebung des Stempeleinsatzes 1 korrespondierende Ausnehmung aus. Der Stempeleinsatz 1 kann auch unmittelbar in einen Stempelblock 6 eingesetzt sein.

Zum Entfernen des Stempeleinsatzes 1 aus dem Stempelkörper 3 wird auf eine Seite des Stempeleinsatzes 1 eine Kraft F ausgeübt, wie durch den Pfeil angedeutet. Dadurch wird der Stempeleinsatz 1 um eine schematisch angedeutete Drehachse 14 verschwenkt, so dass ein Abschnitt des Stempeleinsatzes 1 aus der dazu korrespondierenden Ausnehmung des Stempelkörpers 3 nach oben verschwenkt wird und der Stempeleinsatz 1 aus dieser Ausnehmung entfernt werden kann. Dabei muss eine gewisse Kraft auf den Stempeleinsatz 1 ausgeübt werden, um die Feder 5 und den Rastvorsprung 4 voneinander zu lösen. Dazu ist die Feder 5 an dem Stempelkörper 3 geringfügig elastisch ausgelegt.

Zum Einsetzen des Stempeleinsatzes 1 in den Stempelkörper 3 wird der Stempeleinsatz 1 in die halbrunde Ausnehmung des Stempelkörpers 3 eingeführt und niedergedrückt, so dass der Stempeleinsatz 1 um die Drehachse 14 verschwenkt wird, bis der Rastvorsprung 4 mit der Feder 5 am Stempelkörper 3 in Eingriff gebracht ist, wie durch den Doppelpfeil angedeutet.

Der Stempelkörper 3 seinerseits kann wiederum in einer Ausnehmung eines Stempelblocks 6, insbesondere einer Kunststoff-Spritzgussform, angeordnet sein, wobei der Stempelkörper 3 z. B. mit einer Schraube 10, die einen Durchgriff 8, zum Beispiel ein Gewinde, im Stempelblock 6 durchgreift, befestigt sein.

Die Oberfläche des Stempeleinsatzes 1 ist entweder eben ausgeführt oder verfügt über eine Kontur 7 entsprechend der gewünschten Formgebung des zu bestempelnden Werkstücks. Ebenso kann zwischen dem umgebenden Stempelblock 6 und dem Stempelkörper 3 eine Stufe 12 ausgebildet sein bzw. der Stempelkörper 3 relativ zum umgebenden Stempelblock 6 vertieft sein. Der Stempeleinsatz 1 kann auch eine dreidimensionale Vertiefung bzw. einen dreidimensionalen Vorsprung aufweisen.

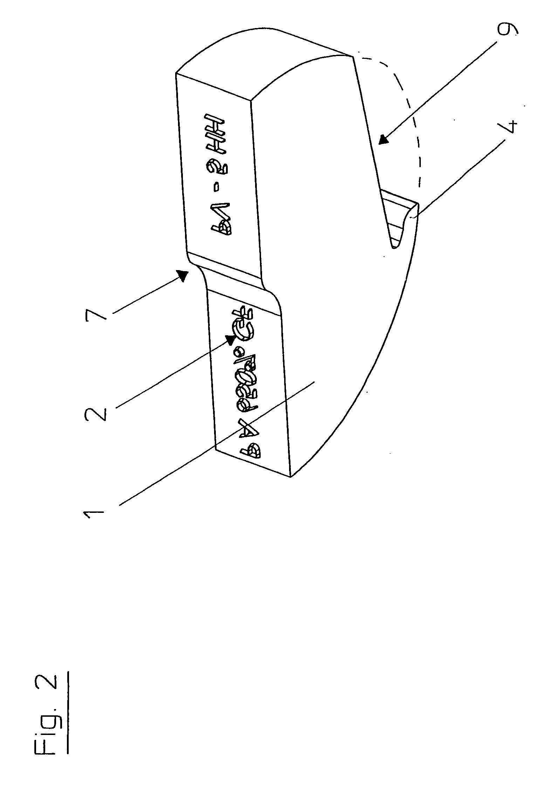

Aus der Darstellung in Figur 2 ist ein Stempeleinsatz 1 ersichtlich, der eine im Wesentlichen halbrunde Gestalt aufweist.

Der Rastvorsprung 4 an seinem halbrunden Außenumfang ist durch eine randseitige Ausnehmung 9 gebildet, die einen Hinterschnitt für den Rastvorsprung 4 bildet. Die eigentliche Prägefläche des Stempeleinsatzes 1 kann entweder plan ausgeführt oder über eine Kontur 7 wie hier dargestellt verfügen. Die Stempelmarkierungen 2 sind entweder erhaben ausgeführt oder bilden Vertiefungen, in die z. B. das flüssige Kunststoffmaterial in einer Spritzgussform fließen kann.

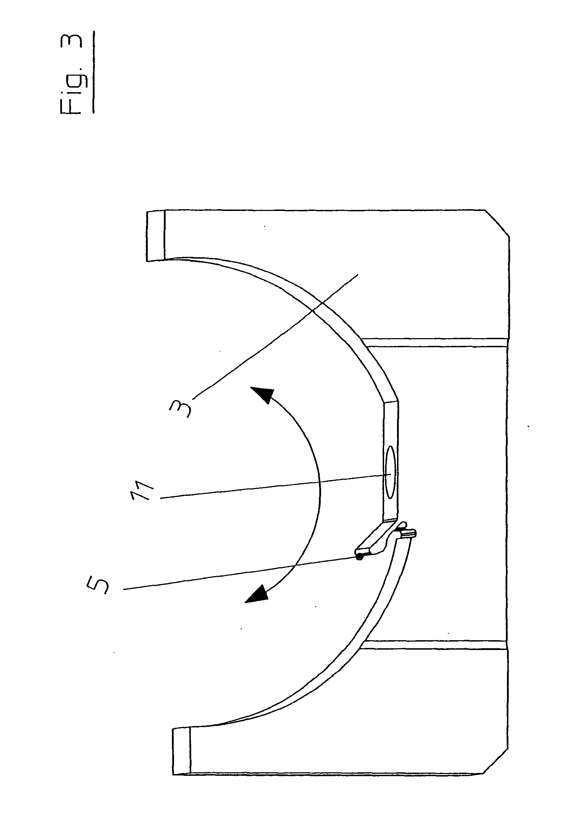

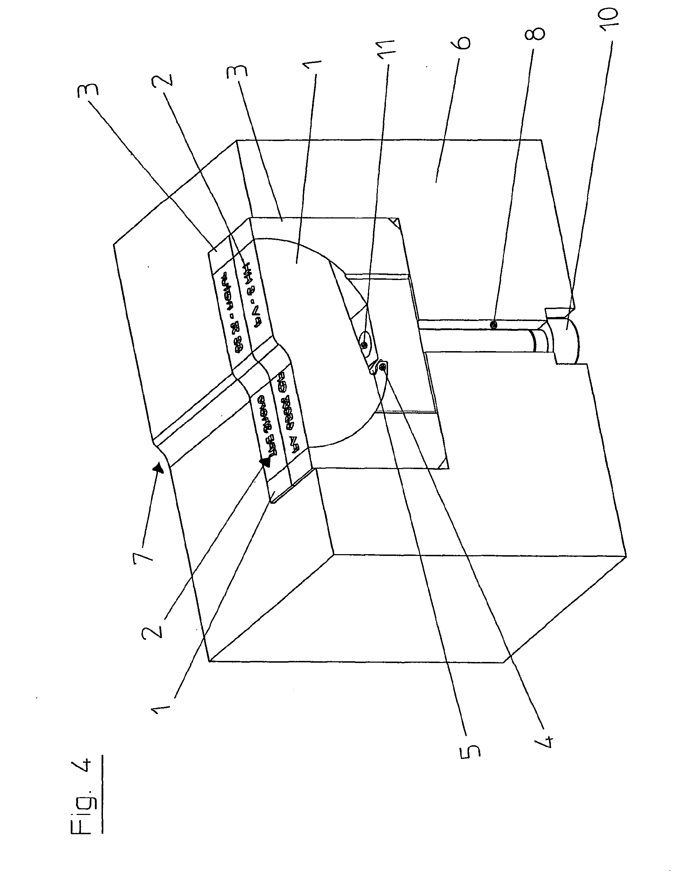

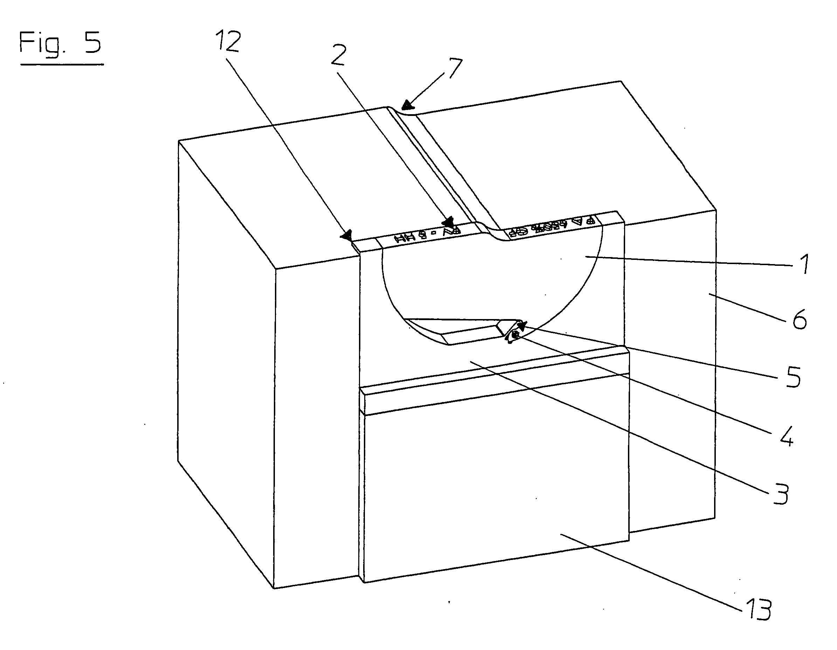

In Figur 3 ist der entsprechende Stempelkörper 3 abgebildet, der über eine zum Stempeleinsatz 1 in Figur 2 korrespondierende halbkreisförmige Ausnehmung verfügt, so dass der Stempeleinsatz 1, wie durch den Doppelpfeil angedeutet, durch eine Drehbewegung in den Stempelkörper 3 eingesetzt bzw. wieder gelöst werden kann. An dem Stempelkörper 3 ist entweder einstückig damit verbunden oder lösbar daran befestigbar eine Feder 5 ausgebildet, die mit dem Rastvorsprung 4 des Stempeleinsatzes 1 als Endanschlag zusammenwirkt. Zur Befestigung des Stempelkörpers 3, z. B. in einem diesen umgebenden Stempelblock 6 kann eine Verschraubung dienen, wobei entweder eine Bohrung 11, zum Beispiel ein Gewinde, in dem Stempelkörper 3 von einer Schraube durchgriffen ist bzw. von unten her der Stempelkörper 3 mit einer Verschraubung am Stempelblock 6 festgelegt ist, wie in Figur 4 dargestellt. Es ist auch möglich, dass mehrere Stempeleinsätze 1 entweder in einem gemeinsamen Stempelkörper 3 oder, wie in Figur 4 dargestellt, in jeweils entsprechenden Stempelkörpern 3 eingesetzt sind. Diese wiederum können in einem Stempelblock 6 angeordnet sein.
Zur Ausbildung einer Stufe 12 zwischen Stempelkörper 3 und umgebenden Stempelblock 6 ist der Stempelblock 6 derart ausgelegt, dass in dem Stempelblock 6 Distanzstücke 13 eingesetzt werden können, um den Stempelkörper 3 geringfügig über den umgebenden Stempelblock 6 hervorzuheben, wie in Figur 5 dargestellt. Ebenso kann der Stempelkörper 3 auch gegenüber dem umgebenden Stempelblock 6 vertieft angeordnet sein.

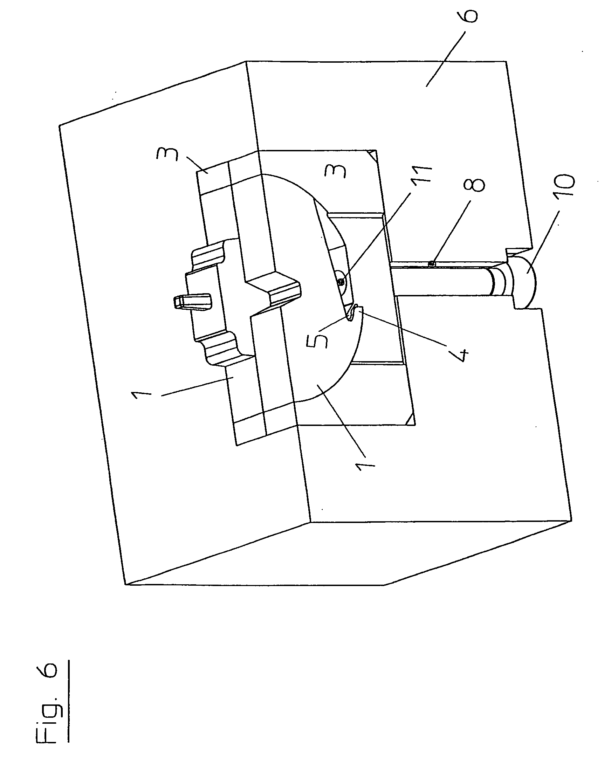

In Figur 6 sind weitere Stempeleinsätze 1 mit dreidimensionalen Erhebungen oder Vertiefungen dargestellt, die einem Spritzgussteil eingeprägt werden.

### Bezugszeichenliste:

- 1: Stempeleinsatz
- 2: Stempelmarkierungen
- 3: Stempelkörper
- 4: Rastvorsprung
- 5: Feder
- 6: Stempelblock
- 7: Kontur
- 8: Durchgriff in 6
- 9: randseitige Ausnehmung an 1
- 10: Schraube
- 11: Bohrung in 3
- 12: Stufe zwischen 6 und 3
- 13: Distanzstück
- 14: Drehachse

## Patentansprüche

1. Stempel zum Prägen im Hoch- oder Tiefdruck mit einem Stempeleinsatz (1), der Stempelmarkierungen (2) aufweist, wobei der Stempeleinsatz (1) in einem Stempelkörper (3) angeordnet ist,
**dadurch gekennzeichnet, dass**
- der Stempeleinsatz (1) in Querschnitt gesehen im Wesentlichen einen halbrunden Querschnitt aufweist,
- am Außenumfang des Stempeleinsatzes (1) ein Rastvorsprung (4) angeordnet ist, und
- am Stempelkörper (3) eine Feder (5) vorgesehen ist, die mit dem Rastvorsprung (4) zusammenwirkt.

2. Stempel nach Anspruch 1,
**dadurch gekennzeichnet, dass**
der Stempelkörper (3) selbst in einen weiteren Stempelblock (6) insbesondere lösbar einsetzbar ist oder der Stempeleinsatz (1) unmittelbar in einen Stempelblock (6) lösbar einsetzbar ist.

3. Stempel nach Anspruch 1 oder 2,
**dadurch gekennzeichnet, dass**
die Feder (5) an dem Stempelkörper (3) lösbar befestigbar ist, insbesondere mit einer Verschraubung.

4. Stempel nach einem der vorhergehenden Ansprüche 1 bis 3,
**dadurch gekennzeichnet, dass**
der Stempeleinsatz (1) eine dreidimensionale Kontur (7) aufweist.

5. Stempel nach einem der vorhergehenden Ansprüche 1 bis 4,
**dadurch gekennzeichnet, dass**
der Stempeleinsatz (1) relativ zum Stempelkörper (3) oder Stempelblock (6) erhaben oder vertieft ist.

6. Stempel nach einem der vorhergehenden Ansprüche 1 bis 5,
**dadurch gekennzeichnet, dass**
mehrere Stempeleinsätze (1) vorgesehen sind.

7. Stempel nach einem der vorhergehenden Ansprüche 1 bis 6,
**dadurch gekennzeichnet, dass**
am Stempelblock (6) Distanzstücke zur Ausrichtung des Stempelkörpers (3) vorgesehen sind.

8. Stempel nach einem der vorhergehenden Ansprüche 1 bis 7,
**dadurch gekennzeichnet, dass**
der Stempel in eine Kunststoff-Spritzgussvorrichtung eingebaut ist.
